# EUROPEAN PATENT APPLICATION

(11) **EP 1 839 912 A2**
(43) Date of publication of application: **03.10.2007**
(21) Application number: 07006303.7
(22) Date of filing: 27.03.2007
(51) Int. Cl.: B60C 23/04

(54) **Tire information detecting system**

(30) Priority: 31.03.2006 JP 2006097771
(71) Applicant: ALPS ELECTRIC CO., LTD., Tokyo 145-8501 (JP)
(72) Inventor: Masudaya, Hideki, Tokyo 145-8501 (JP)
(74) Representative: Klunker . Schmitt-Nilson . Hirsch

(57) **Abstract**

A transponder includes an antenna, a modulation/demodulation unit (diode) that modulates and demodulates signals received and transmitted from and to a controller, a pressure resonator including a first piezoelectric single-crystal resonating element and a pressure sensor, where the resonance frequency of the pressure resonator changes in accordance with a change in tire pressure, and a reference resonator including a second piezoelectric single-crystal resonating element and a capacitor, where the resonance frequency of the reference resonator is not effected by the change in tire pressure. The first and second piezoelectric single-crystal resonating elements are integrally formed on a single-crystal piece. The controller transmits a signal for resonating the pressure resonator and the reference resonator, receives signals modulated with the resonance frequencies of the pressure resonator and the reference resonator, and computes a measured value in accordance with the resonance frequencies of the two resonators retrieved from the received signals.

## Description

### BACKGROUND OF THE INVENTION

### 1. Field of the Invention

The present invention generally relates to a tire information detecting system and, in particular, to a tire information detecting system used for motor vehicles to detect tire information, such as a tire pressure.

### 2. Description of the Related Art

Wireless transmission systems have been developed that wirelessly transmit a measured value, such as tire pressure of a motor vehicle or the like, to a controller disposed on the body of the motor vehicle in order to evaluate that value for outputting a warning message to a driver (refer to, for example, Japanese Patent No. 3494440 and, in particular, Figs. 3 and 5). Such wireless transmission systems include a controller, as shown in Fig. 5, disposed on the body of a motor vehicle and a measured value transmitter (transponder), as shown in Fig. 6, disposed in a tire.

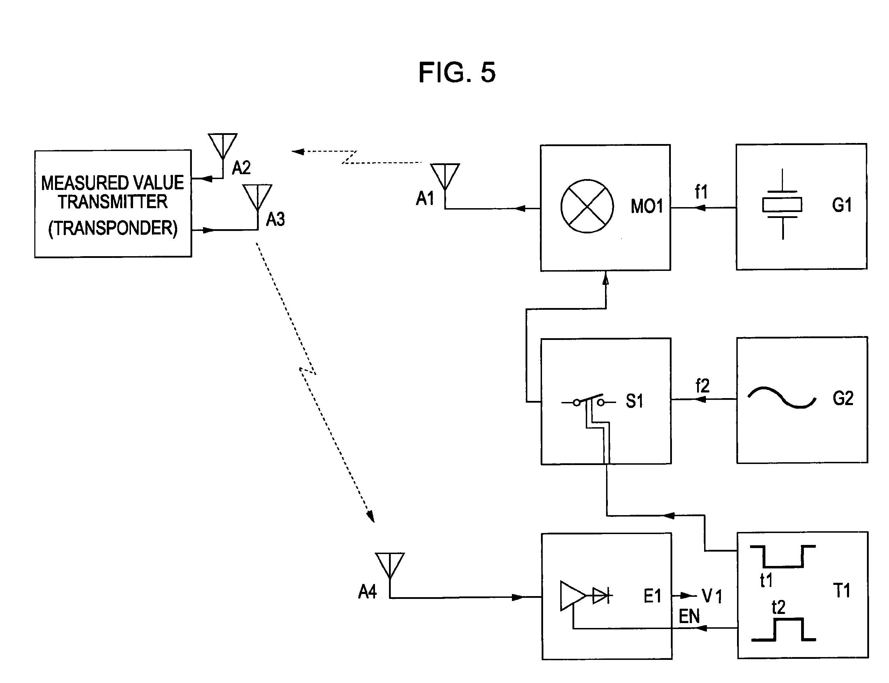

As shown in Fig. 5, the controller includes a carrier wave oscillator G1 for generating carrier waves f1 having a frequency of about 2.4 GHz, a modulator MO1, and an oscillator G2 for outputting an oscillation signal for modulation. The oscillator G2 outputs, to the modulator MO1, an oscillation signal having a frequency f2 that is close to the resonance frequency of a resonator of a transponder, which is described below. The carrier waves output from the carrier wave oscillator G1 are amplitude-modulated by the oscillation signal output from the oscillator G2. Subsequently, the amplitude-modulated 2.4-GHz high-frequency signal is amplified by an amplifier (not shown) and is emitted from an antenna A1 disposed in the vicinity of the tire.

The controller further includes a switch S1, a receiver E1, and a timer T1. The switch S1 is used for selecting whether or not the amplitude modulation is performed by the modulator MO1. The receiver E1 receives a high-frequency signal emitted from the transponder and computes a measured value (S1), such as a tire pressure. The timer T1 controls the switching timing of the switch S1 and the state of the receiver E1. After the timer T1 sets the carrier waves to be amplitude-modulated so that an amplitude-modulated high-frequency signal is transmitted for a predetermined time period, the amplitude modulation is stopped at a time t1. Thereafter, unmodulated carrier waves are transmitted. The receiver E1 becomes active at a time t2 which is within about 1 µs from the time t1 so as to receive the high-frequency signal output from the transponder via an antenna A4.

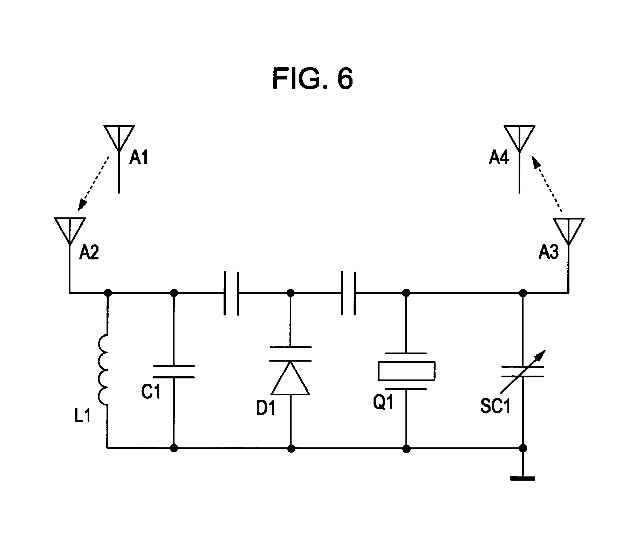

As shown in Fig. 6, the transponder includes a low-pass filter L1/C1, a diode D1 serving as a modem, and a capacitive pressure sensor (hereinafter simply referred to as a "pressure sensor") SC1 whose capacitance varies in accordance with a tire pressure, and a resonator including a quartz crystal resonating element Q1 that is excited by a frequency component included in the high-frequency signal output from the controller. The 2.4-GHz carrier waves are removed from the high-frequency signal output from the controller by the low-pass filter L1/C1. Subsequently, the high-frequency signal is demodulated by the diode D1. In this way, a signal having a frequency that is the same as that of the oscillation signal from the oscillator G2 is retrieved. Since the resonator has a resonance frequency close to the frequency of the oscillation signal from the oscillator G2, the resonator is excited by the signal generated here. This excitation generates a signal having the resonance frequency. Note that since the resonance frequency of the resonator varies as the capacitance of the pressure sensor SC1 varies in accordance with the tire pressure, the signal of the resonance frequency generated here is effected by the variation.

As noted above, the controller transmits the amplitude-modulated high-frequency signal and, subsequently, the controller stops the amplitude modulation so as to continuously transmit unmodulated carrier waves. After the amplitude modulation is stopped, the resonator still oscillates for at least about 1 ms. Accordingly, the unmodulated carrier waves output from the controller are amplitude-modulated by the diode D1 in accordance with a signal having the resonance frequency of the resonator and are emitted from an antenna A3. The receiver E1 receives the amplitude-modulated high-frequency signal via the antenna A4 and retrieves the signal having the resonance frequency using, for example, a modem (not shown). In this way, the controller can compute the measured value (V1), such as a tire pressure.

In the wireless transmission system described in Japanese Patent No. 3494440, the transponder can further includes a reference resonator including a quartz crystal resonating element resonator and additional resonators. Thus, the transponder transmits measured values, such as the tire temperature and the structural stress of the tire, so that the controller can compute these measured values.

However, in the above-described wireless transmission systems, the resonance frequency of the resonator in the transponder is effected by not only the desired tire information such as a tire pressure but also another factor such as temperature. Thus, an error occurs in the measured value due to a change in temperature in the tire, and therefore, an accurate measured value cannot be detected.

In addition, even when the transponder further includes a reference resonator to compute the measured value of a tire pressure, an error in the measured value still occurs, since the temperature characteristics and the secular change characteristics of the quartz crystal resonating elements of the resonators are different. Accordingly, an accurate measured value cannot be detected.

### SUMMARY OF THE INVENTION

Accordingly, it is an object of the present invention to provide a tire information detecting system that can reduce the effects of the factors other than the desired tire information and accurately detect the desired tire information, such as a tire pressure.

According to an embodiment of the present invention, a tire information detecting system includes a measured value transmitter disposed in a tire of a vehicle and a controller disposed in the body of the vehicle. The measured value transmitter includes an antenna, a modulation/demodulation unit that is connected to the antenna and that modulates and demodulates signals received and transmitted from and to the controller, first and second coupling capacitors connected to the antenna, a first resonator connected to the first coupling capacitor and including a first piezoelectric single-crystal resonating element and a pressure sensor, where the resonance frequency of the first resonator is changed in accordance with the pressure of the tire, and a second resonator connected to the second coupling capacitor and including a second piezoelectric single-crystal resonating element and a capacitor, where the resonance frequency of the second resonator is not effected by the pressure of the tire, and wherein the first piezoelectric single-crystal resonating element and the second piezoelectric single-crystal resonating element are formed on a single-crystal piece in an integrated fashion, and wherein the controller transmits a signal for resonating the first and second resonators, receives a signal modulated with the resonance frequency of the first resonator and a signal modulated with the resonance frequency of the second resonator, and computes a measured value in accordance with the resonance frequencies of the first and second resonators retrieved from the received signals.

In such a configuration, the measured value transmitter includes a first resonator having the resonance frequency that is changed in accordance with the pressure of the tire and a second resonator having the resonance frequency that is not effected by the pressure of the tire and the controller computes a measured value in accordance with the resonance frequencies retrieved from the signals modulated with the resonance frequencies of the first and second resonators. Accordingly, even when the temperature of the tire changes, the measured value can be computed from the resonance frequencies of the two resonators that are subjected to the effect of the temperature change. Consequently, the effect caused by a factor, such as a temperature change of the tire, can be reduced, and therefore, the measured value, such as a tire pressure, can be accurately detected.

In particular, in the tire information detecting system, the first piezoelectric single-crystal resonating element and the second piezoelectric single-crystal resonating element of the first and second resonators are formed on the single-crystal piece. Since the first and second resonators use the same single-crystal piece, the characteristics including the temperature characteristic and the time degradation characteristic of the first resonator can be made close to those of the second resonator. As a result, even when the temperature of the tire is changed, the effect is equally applied to the resonance frequencies of the two resonators. Thus, by computing the measured value in accordance with the resonance frequencies of the first and second resonators, the effect caused by a factor, such as a temperature change of the tire, can be reduced, and therefore, the measured value, such as a tire pressure, can be further accurately detected.

Preferably, in the tire information detecting system, the first piezoelectric single-crystal resonating element is a quartz crystal resonating element, the second piezoelectric single-crystal resonating element is a quartz crystal resonating element, and the single-crystal piece is a quartz piece. In such a configuration, since the quartz crystal resonating element has a high Q and the response frequency is stable. Therefore, reliable measurement can be provided compared with the other types of piezoelectric single-crystal resonating elements.

Preferably, in the tire information detecting system, an electrode for the first quartz crystal resonating element and an electrode for the second quartz crystal resonating element are attached to the quartz piece used for the quartz crystal resonating elements and wherein the quartz piece is elastically separated between the two electrodes. In such a configuration, the vibrations of one of the quartz crystal resonating elements in accordance with one of the two resonance frequencies received from the controller is not transferred to the electrode of the other quartz crystal resonating element that is not related to that resonance frequency. Accordingly, the measured value, such as a tire pressure, can be further accurately detected.

For example, a groove may be formed between the two electrodes attached to the quartz piece. Alternatively, a hole may be formed between the two electrodes attached to the quartz piece. In this way, by forming the groove or the hole, the quartz piece of a quartz filter can be elastically separated between the two electrodes attached to the quartz piece.

According to the present invention, the effect caused by a factor, such as a temperature change of the tire, can be reduced, and therefore, the measured value, such as a tire pressure, can be accurately detected.

### BRIEF DESCRIPTION OF THE DRAWINGS

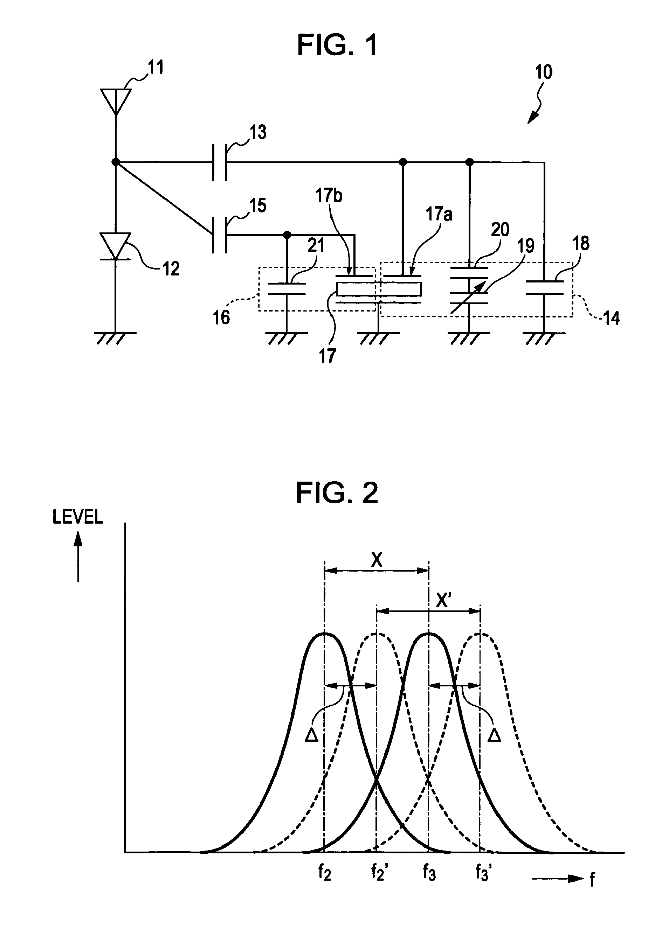

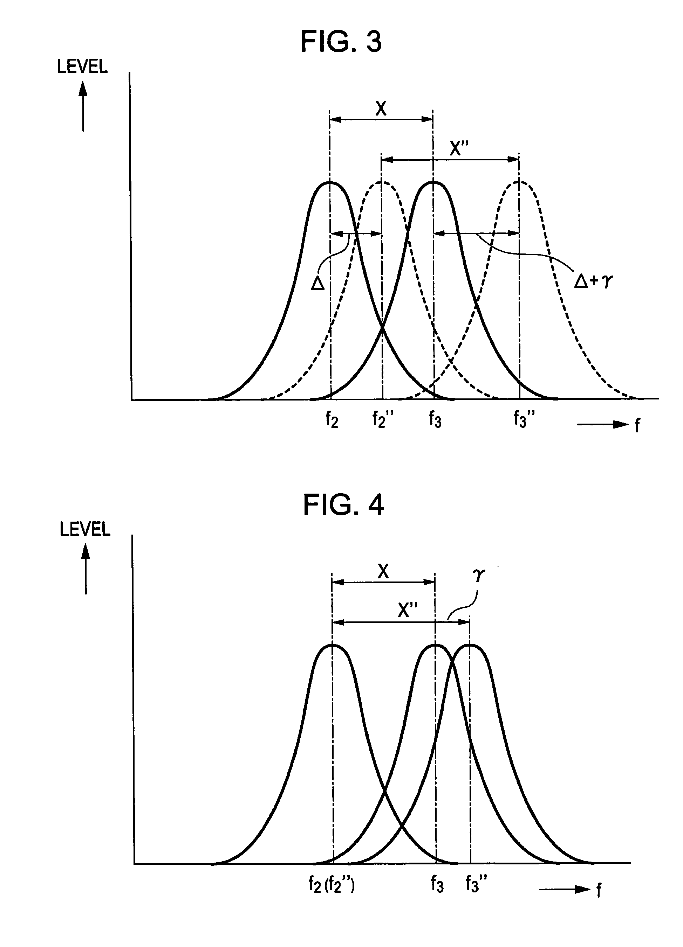

Fig. 1 illustrates an exemplary circuit configuration of a transponder of a tire information detecting system according to an embodiment of the present invention;
Fig. 2 is a diagram illustrating the difference between the resonance frequency of a reference resonator and the resonance frequency of a pressure resonator in the transponder according to the embodiment of the present invention;
Fig. 3 is a diagram illustrating the difference between the resonance frequency of a reference resonator and the resonance frequency of a pressure resonator in the transponder according to the embodiment of the present invention;
Fig. 4 is a diagram illustrating a change in the difference between the resonance frequency of a reference resonator and the resonance frequency of a pressure resonator in the transponder according to the embodiment of the present invention;
Fig. 5 is a schematic illustration of a circuit diagram of a controller of a known tire information detecting system; and
Fig. 6 is a schematic illustration of a circuit diagram of a transponder of a known tire information detecting system.

### DESCRIPTION OF THE PREFERRED EMBODIMENTS

An embodiment of the present invention is now herein described in detail with reference to the accompanying drawings. According to the present embodiment, like the above-described known tire information detecting system (wireless transmission system), a tire information detecting system includes a controller disposed on the body of a vehicle and a measured value transmitter (hereinafter referred to as a "transponder") disposed in a tire.

In particular, the configuration of the transponder of the tire information detecting system according to the present embodiment is different from that of the known tire information detecting system. Therefore, hereinafter, the circuit configuration of the transponder of the tire information detecting system according to the present embodiment is described in detail. The difference between the configurations of the controllers is described with reference to components shown in Fig. 5 as needed.

Fig. 1 illustrates an exemplary circuit configuration of the transponder of the tire information detecting system according to the present embodiment. Note that the circuit configuration shown in Fig. 1 is a simplified one for describing the present invention. Thus, a low-pass filter L1/C1 included in the known transponder (see Fig. 6) is not shown. In Fig. 1, the low-pass filter is to be connected between an antenna 11, which is described below, and a pair of coupling capacitors 13 and 15.

According to the present embodiment, as shown in Fig. 1, a transponder 10 includes the transmission/reception antenna 11. A modulating/demodulating diode 12 is connected to the antenna 11 in series. Additionally, a pressure resonator 14 is connected to the antenna 11 via the coupling capacitor 13. Furthermore, a reference resonator 16 is connected to the antenna 11 via the coupling capacitor 15.

Each of the pressure resonator 14 and a reference resonator 16 is composed of a resonator including a quartz crystal resonating element. The pressure resonator 14 serves as a first resonator whereas the reference resonator 16 serves as a second resonator.

The pressure resonator 14 includes a quartz crystal resonating element 17a formed on a quartz piece 17 for measuring a pressure, a capacitor 18 for forming the load capacitance for determining the resonance frequency of the pressure resonator 14, and a capacitive pressure sensor (hereinafter simply referred to as a "pressure sensor") 19. The pressure sensor 19 is connected to the quartz crystal resonating element 17a via an adjustment capacitor 20 so as to prevent the variation in detected values. The pressure resonator 14 has a resonance frequency of, for example, 9.800 MHz. This resonance frequency of the pressure resonator 14 varies in accordance with the tire pressure detected by the pressure sensor 19.

In contrast, the reference resonator 16 includes a quartz crystal resonating element 17b formed on the quartz piece 17 for providing a reference value for measuring a pressure and a capacitor 21 for forming the load capacitance for determining the resonance frequency of the reference resonator 16. The reference resonator 16 serving as a reference sensor unit has a resonance frequency of, for example, 9.803 MHz.

The pressure resonator 14 is connected to the antenna 11 via the coupling capacitor 13. The reference resonator 16 is connected to the antenna 11 via the coupling capacitor 15. Accordingly, the effect of one of the pressure resonator 14 and the reference resonator 16 on the other is reduced to a level at which the measurement can be performed without any problems. Therefore, the resonance frequency of the reference resonator 16 is not effected by the pressure detected by the pressure sensor 19. The resonance frequency of the pressure resonator 14 is effected by not only the capacitance of the pressure sensor 19 that changes in accordance with the air pressure of a tire to be measured but also an environmental change in the tire (e.g., a temperature change in the tire). By disposing the reference resonator 16 having no pressure sensor 19 and measuring the resonance frequency of the reference resonator 16, only the effect of the environmental change can be measured. Thus, the pressure sensor 19 can measure the tire pressure without the effect of the environmental change from the resonance frequencies of the two resonators.

As shown in Fig. 1, the quartz crystal resonating element 17a of the pressure resonator 14 and the quartz crystal resonating element 17b of the reference resonator 16 are formed from the same quartz piece 17. To form the quartz piece 17, two electrodes for the quartz crystal resonating elements 17a and 17b are evaporated on a single quartz piece. The electrode for the quartz crystal resonating elements 17a is connected to the pressure resonator 14 whereas the electrode for the quartz crystal resonating elements 17b is connected to the reference resonator 16. Since the two electrodes are evaporated on the same quartz piece, the characteristics including the temperature characteristic and the time degradation characteristic of the pressure resonator 14 can be made close to those of the reference resonator 16.

Unlike the known tire information detecting system, in the controller of the tire information detecting system according to the present embodiment, the oscillator G2 generates an oscillation signal having a frequency f2 that is close to the resonance frequency of the reference resonator 16 and an oscillation signal having a frequency f3 that is close to the resonance frequency of the pressure resonator 14. More specifically, an oscillation signal having a center frequency of 9.803 MHz and an oscillation signal having a center frequency of 9.800 MHz are generated. The carrier waves f1 are amplitude-modulated by these oscillation signals. Like the known controller, the switch S1 selects whether the amplitude modulation is performed or not.

According to the present embodiment, amplitude modification is performed by the oscillation signal having a center frequency of f2 (the oscillation signal having a center frequency of 9.803 MHz) and, subsequently, the amplitude modification is stopped. Thereafter, amplitude modification is performed by the oscillation signal having a center frequency of f3 (the oscillation signal having a center frequency of 9.800 MHz) and, subsequently, the amplitude modification is stopped. Even when the amplitude modification by the first oscillation signal having a center frequency of f2 is stopped, the reference resonator 16 continues to oscillate for about 1 ms or more, like the known transponder. Accordingly, unmodulated carrier waves f1 are amplitude-modified by a signal having the resonance frequency of the reference resonator 16 via the diode 12 and then are emitted from the antenna 11. Similarly, even when the amplitude modification by the second oscillation signal having a center frequency of f3 is stopped, the pressure resonator 14 continues to oscillate for about 1 ms or more. Accordingly, unmodulated carrier waves f1 are amplitude-modified by a signal of the resonance frequency of the reference resonator 16 via the diode 12 and then are emitted from the antenna 11.

Since the reference resonator 16 and the pressure resonator 14 are disposed in the same tire, these resonance frequencies are effected by a factor, such as a temperature of the tire, in the same manner. In addition, the resonance frequency of the pressure resonator 14 is effected by a change in the pressure detected by the pressure sensor 19. in contrast, the resonance frequency of the reference resonator 16 is not effected by the change in the pressure detected by the pressure sensor 19. The controller receives the high-frequency signal amplitude-modified by the signal having the resonance frequency of the reference resonator 16 and the high-frequency signal amplitude-modified by the signal having the resonance frequency of the pressure resonator 14, which are effected in this manner. Subsequently, the controller determines the difference between the frequency of the signal having the resonance frequency retrieved from the former high-frequency signal (hereinafter sometimes referred to as a "reference measurement frequency") and the frequency of the signal having the resonance frequency retrieved from the latter high-frequency signal (hereinafter sometimes referred to as a "pressure measurement frequency"). Thus, the controller measures the tire pressure. More specifically, a correlation data table among the reference measurement frequency, the pressure measurement frequency, and a tire pressure is generated in advance, and the tire pressure is computed using this correlation data table.

Fig. 2 to Fig. 4 are diagram illustratings to compute the tire pressure by the difference between the reference measurement frequency and the pressure measurement frequency. The tire pressure can be detected by measuring a frequency difference between the reference measurement frequency and the pressure measurement frequency. That is, by computing the frequency difference between the pressure measurement frequency that is detected by the pressure sensor 19 and that is effected by a change in pressure and the reference measurement frequency that is little effected by the change in pressure, the tire pressure can be detected.

Note that both the reference resonator 16 and the pressure resonator 14 are effected by the factor of the temperature of the tire. Accordingly, for example, when the temperature of the tire is changed, the center frequencies of the reference measurement frequency f2 and the pressure measurement frequency f3 are deviated by substantially the same frequency width Δ, as illustrated by a dotted curve in Fig. 2 (see a reference measurement frequency f2' and a pressure measurement frequency f3' shown in Fig. 2). In particular, according to the present embodiment, the characteristics of the quartz crystal resonating element 17a used for the pressure resonator 14 closely resemble those of the quartz crystal resonating element 17b used for the reference resonator 16, as described below. Therefore, the difference between frequency changes caused by the change in temperature is significantly small. Consequently, the frequency difference X between the reference measurement frequency f2 and the pressure measurement frequency f3 is substantially the same as the frequency difference X' between the reference measurement frequency f2' and the pressure measurement frequency f3', and therefore, a measurement difference between the frequency difference X and the frequency difference X' is negligible.

Fig. 3 illustrates a graph when the tire pressure and temperature are changed. The center frequency of the reference measurement frequency f2 is deviated by a width Δ so that the reference measurement frequency f2 is changed to a reference measurement frequency f2". In contrast, the center frequency of the pressure measurement frequency f3 is deviated by the width Δ plus a width y which is the effect of the pressure sensor 19 so that the pressure measurement frequency f3 is changed to a pressure measurement frequency f3".

Fig. 4 illustrates a difference between a pressure measurement frequency and the reference measurement frequency. Fig. 4 indicates that, in any state, the frequency difference y between the frequency difference X and the frequency difference X" is effected only by the pressure. Therefore, the tire pressure can be obtained by using a formula or a correlation data table between this value and the tire pressure obtained through experiments in advance.

While, in the foregoing description, the tire pressure has been computed from a frequency difference, the tire pressure can be computed by measuring the temperature using the reference measurement frequency first and, subsequently, using the measured value of the pressure measurement frequency and a correlation data between a temperature and a pressure measurement frequency. That is, regardless of whether computed directly or indirectly, the tire pressure can be computed from the reference measurement frequency and the pressure measurement frequency.

Additionally, since the pressure resonator 14 and the reference resonator 16 are disposed in the same tire, these two resonators are effected by the environmental change, such as a temperature change, in the tire at the same time. In such a case, if the characteristics of the two quartz crystal resonating elements in the two resonators are different and the two quartz crystal resonating elements are effected by the same environmental change, the changes in the resonance frequencies of the pressure resonator 14 and the reference resonator 16 are different. As a result, an error occurs in computation of the tire pressure. The temperature characteristic is the most important among these characteristics. This is because, in general, quartz crystal resonating elements are sensitive to a temperature and a significant temperature change occurs in a tire. The main reason for providing the reference resonator 16 is to correct the effect of temperature received by the pressure resonator 14. However, in this case, if the temperature characteristics of the quartz crystal resonating elements of the pressure resonator 14 and the reference resonator 16 are different, an error occurs in this correction. Therefore, the temperature characteristics are important. In addition, the time degradation characteristic needs to be taken into account to prevent an error caused by time degradation.

Accordingly, the tire information detecting system according to the present embodiment employs the same quartz piece for the quartz crystal resonating elements of the pressure resonator 14 and the reference resonator 16. Thus, the characteristics of the pressure resonator 14 closely resemble the characteristics of the reference resonator 16. As a result, the above-described problem can be solved. Two electrodes are evaporated onto a single quartz piece to form the quartz piece 17. One of the two electrodes functions as an electrode of a first quartz crystal resonating element 17a of the pressure resonator 14 and the other of the two electrodes functions as an electrode of a second quartz crystal resonating element 17b of the reference resonator 16. One of the two quartz resonator resonates in accordance with a signal received from the controller and including two types of resonance frequencies. At that time, in the present embodiment, it is desirable that the vibration of the quartz piece in accordance with one of the two resonance frequencies is not transferred to the electrode of the quartz resonator that is not related to that resonance frequency.

For example, the quartz piece on which the two electrodes are evaporated is resiliently separated by forming a groove or forming a border line by means of laser between the two electrodes on the quartz piece 17, by forming a hole at the center between the two electrodes, or by increasing the distance between the two electrodes. In such a case, since vibrations in accordance with one of the two resonance frequencies received from the controller is not transferred to the electrode that is not related to that resonance frequency, the measured value, such as a tire pressure, can be detected in high precision.

While, in the foregoing description, the quartz crystal resonating elements 17a and 17b formed from a quartz crystal have been used as piezoelectric single-crystal resonating elements disposed in the pressure resonator 14 and the reference resonator 16, the piezoelectric single-crystal resonating elements are not limited to quartz crystal resonating elements. For example, a resonating element obtained by processing a piezoelectric single-crystal lithium tantalite (LiTaO₃), a piezoelectric single-crystal niobium tantalate (LiNbO₃), a piezoelectric single-crystal lithium borate (Li₂B₄O₇), a piezoelectric single-crystal potassium niobate (KN-bO₃), a piezoelectric single-crystal langasite (La₃Ga₅SiO₁₄), a piezoelectric single-crystal langanite (La₃Nb_{0.5}Ga_{5.5}O₁₄), or a lead zinc niobate titanate single crystal can be used. Like the quartz crystal resonating element, a plurality of these resonating elements can be produced from a wafer. In the manufacturing steps, two resonating elements having similar characteristics can be obtained on the same quartz piece. Therefore, these two resonating elements can be used as piezoelectric single-crystal resonating elements according to the present invention. To obtain similar characteristics in the manufacturing steps, the method used for the quartz crystal resonating element can be also used. However, the method is modified in accordance with the material. Since the quartz crystal resonating element has a high Q compared with the other piezoelectric single-crystal resonating elements, the response frequency is stable, and therefore, the measured values are stable. Accordingly, the quartz crystal resonating element is suitable for providing a high-precision tire information detecting system.

As described above, in the tire information detecting system according to the present embodiment, the transponder 10 includes the pressure resonator 14 that changes the resonance frequency thereof in accordance with a tire pressure and the reference resonator 16 having the resonance frequency thereof that is not effected by a change in the tire pressure. The controller computes a measured value on the basis of the resonance frequencies of the pressure resonator 14 and the reference resonator 16 retrieved from resonance frequency signals of the pressure resonator 14 and the reference resonator 16. In this way, for example, even when the temperature of the tire is changed, the measured value can be computed on the basis of the resonance frequencies of the two resonators effected by the change in the tire temperature. Thus, the affect of a factor, such as the tire temperature, can be reduced, and therefore, the measured value, such as a tire pressure, can be accurately detected.

In particular, in the tire information detecting system according to the present embodiment, the piezoelectric single-crystal resonating elements, such as the quartz crystal resonating element, included in the pressure resonator and the reference resonator are formed from the same single-crystal piece (quartz piece). Since the same single-crystal piece (quartz piece) is used for the pressure resonator and the reference resonator, the characteristics including the temperature characteristic and the time degradation characteristic of the pressure resonator can be made to be close to those of the reference resonator. As a result, even when the temperature of the tire is changed, the effect of a change in the tire temperature is equally applied to the resonance frequencies of the two resonators. Accordingly, by computing the measured value in accordance with the frequency difference between the resonance frequencies of the pressure resonator and the reference resonator, the effect of a factor, such as a tire temperature, can be reduced, and therefore, the measured value, such as a tire pressure, can be further accurately detected.

It should be noted that the present invention is not limited to the above-described embodiments. On the contrary, various modifications can be made to the above-described embodiments. In the above-described embodiments, the sizes and shapes of the components shown in the attached drawings are not limited thereto. For example, the scales can be altered within the spirit and scope of the inventive concepts described as needed. In addition, various changes may be made within the spirit and scope of the present invention.

Furthermore, while the present embodiment has been described with reference to the controller in which the amplitude modification of the carrier waves f1 by the oscillation signal of 9.800 MHz is temporally shifted from that by the resonance signal of 9.803 MHz, the timing of the amplitude modification can be appropriately changed. For example, the amplitude modification of the carrier waves f1 by the oscillation signal of 9.800 MHz may be performed at the same time as that by the oscillation signal of 9.803 MHz. Even in such a case, the same advantage as that of the above-described embodiment can be provided.

## Claims

1. A tire information detecting system comprising:
a measured value transmitter disposed in a tire of a vehicle; and
a controller disposed in the body of the vehicle;
wherein the measured value transmitter includes an antenna, a modulation/demodulation unit that is connected to the antenna and that modulates and demodulates signals received and transmitted from and to the controller, first and second coupling capacitors connected to the antenna, a first resonator connected to the first coupling capacitor and including a first piezoelectric single-crystal resonating element and a pressure sensor, where the resonance frequency of the first resonator is changed in accordance with the pressure of the tire, and a second resonator connected to the second coupling capacitor and including a second piezoelectric single-crystal resonating element and a capacitor, where the resonance frequency of the second resonator is not effected by the pressure of the tire, and wherein the first piezoelectric single-crystal resonating element and the second piezoelectric single-crystal resonating element are formed on a single-crystal piece in an integrated fashion, and wherein the controller transmits a signal for resonating the first and second resonators, receives a signal modulated with the resonance frequency of the first resonator and a signal modulated with the resonance frequency of the second resonator, and computes a measured value in accordance with the resonance frequencies of the first and second resonators retrieved from the received signals.

2. The tire information detecting system according to Claim 1, wherein the first piezoelectric single-crystal resonating element is a first quartz crystal resonating element, the second piezoelectric single-crystal resonating element is a second quartz crystal resonating element, and the single-crystal piece is a quartz piece.

3. The tire information detecting system according to Claim 1 or 2, wherein an electrode for the first quartz crystal resonating element and an electrode for the second quartz crystal resonating element are attached to the quartz piece used for the quartz crystal resonating elements and wherein the quartz piece is elastically separated between the two electrodes.

4. The tire information detecting system according to Claim 3, wherein a groove is formed between the two electrodes disposed on the quartz piece.

5. The tire information detecting system according to Claim 3 or 4, wherein a hole is formed between the two electrodes disposed on the quartz piece.
